Europäisches Patentamt

European Patent Office

Office européen des brevets

(19)

(11) Veröffentlichungsnummer: **0 219 043**

**A2**

(12) **EUROPÄISCHE PATENTANMELDUNG**

(21) Anmeldenummer: 86113876.6

(22) Anmeldetag: 07.10.86

(51) Int. Cl.⁴: **C09D 3/80** , C08L 33/06

(30) Priorität: 17.10.85 DE 3536931

(43) Veröffentlichungstag der Anmeldung:
22.04.87 Patentblatt 87/17

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Gulbins, Erich, Dr.
Ladenburger Strasse 80
D-6900 Heidelberg(DE)
Erfinder: Ley, Gregor, Dr.
In den Trankstuecken
D-6719 Wattenheim(DE)
Erfinder: Wistuba, Eckehardt, Dr.
Im Obergarten 7
D-6702 Bad Duerkheim(DE)

(54) **Verfahren zur Herstellung von wässrigen Copolymerisat-Dispersionen, die Terpene enthalten.**

(57) Wäßrige Dispersionen von Copolymerisaten mit einer MFT von -20 bis +60°C aus 1 bis 12 C-Atome im Alkoholrest enthaltenden Acryl-und/oder Methacrylsäurealkylestern, Styrol, Acrylnitril, Vinylchlorid und/oder Vinylidenchlorid sowie jeweils 0 bis 5 Gew.% $\alpha,\beta$-monoolefinisch ungesättigten mono- und/oder Dicarbonsäuren und/oder deren gegebenenfalls am Stickstoffatom substituierten Amiden, deren Anteil an Monomeren deren Homopolymerisate eine Glastemperatur über 50°C haben, über 50 Gew.%, bezogen auf die Copolymerisate, liegt, und die einen Gehalt von 2 bis 100 Gew.%, bezogen auf die Copolymerisate, an Terpenen haben, werden mit Vorteil hergestellt, indem man die Terpene dem Polymerisationsgemisch während der Polymerisation zusetzt.

## Verfahren zur Herstellung von wäßrigen Copolymerisat-Dispersionen, die Terpene enthalten

Beschichtungen haben neben dekorativen Aufgaben meist den Zweck, das Substrat gegen vielfältige Einwirkungen zu schützen. Dabei ist der Schutz gegen Wasser oder wäßrige Lösungen von Agentien besonders wichtig. Geringe Wasseraufnahme der Beschichtungen und eine geringe Wasseraufnahme der Hauptbestandteile, z.B. der Bindemittel sind daher oft vorteilhaft. Die Wasseraufnahme der Bindemittel wird üblicherweise an Filmen bestimmt, die unter definierten, den Verhältnissen bei der praktischen Verwendung angepaßten Bedingungen durch Abdampfen des Wassers aus der Bindemittel-Dispersion hergestellt sind. Die so bestimmte Wasseraufnahme der Bindemittel-Filme ist in vielen Fällen erheblich größer als die Wasseraufnahme von Bindemittelfilmen, die unter vergleichbaren Bedingungen durch Verdampfen des Lösemittels aus entsprechenden Polymerisatlösungen hergestellt sind. Dies wird vor allem durch die besondere Struktur von Dispersionsfilmen, die durch dichtes Packen, Deformieren und Verschweißen von Latexteilchen mit Durchmessern von ca. 50 bis 1000 nm beim Verdampfen des Wassers gebildet werden, und die Anwesenheit beträchtlicher Mengen niedermolekularer wasserlöslicher Verbindungen und Salze im Dispersionsfilm, die beim Herstellprozeß unvermeidlich in die Dispersion gelangen und/oder auch in der fertigen Dispersion unentbehrlich sind, verursacht.

Die verhältnismäßig hohe Wasseraufnahme von Filmen, die aus Bindemittel-Dispersion hergestellt sind, ist oft mitverantwortlich für mangelhafte Haftung und Blasenbildung von Beschichtungen auf Substraten bei langdauernder Wasserbelastung. Besonders kritisch ist die Prüfung von Beschichtungen im sogenannten Schwitzwassertest, bei dem auf dem beschichteten Substrat bei erhöhter Temperatur Wasserdampf kondensiert wird. Im Hinblick auf Blasenbildung und Haftungsverlust ist dieser Test härter als der übliche Salzsprühtest, vermutlich wegen der stärkeren osmotischen Quellung salzhaltiger Filme in kondensierendem Wasser.

Mangelhaftes Verhalten in diesen Tests steht einer Verwendung von Dispersionen als Bindemittel, insbesondere für Anstrichmittel, im allgemeinen im Wege. Bindemittel-Dispersionen die Filme mit besonders niedriger Wasseraufnahme und vorteilhaftem Verhalten in diesem wichtigen Test sind daher von besonderem praktischem Interesse.

Es wurde nun gefunden, daß man wäßrige Dispersionen von Copolymerisaten mit einer MFT von -20 bis +60°C aus 1 bis 12 C-Atome im Alkoholrest enthaltenden Acryl-und/oder Methacrylsäureestern, Styrol, Acrylnitril, Vinylchlorid und/oder Vinylidenchlorid, sowie jeweils 0 bis 5 Gew.% α,β-monoolefinisch ungesättigten Mono-und/oder Dicarbonsäuren und/oder deren gegebenenfalls am Stickstoffatom substituierten Amiden, deren An teil an Monomeren, deren Homopolymerisate eine Glastemperatur über 50°C haben, über 50 Gew.%, bezogen auf die Copolymerisate, liegt, die 2 bis 100 Gew.%, bezogen auf die Copolymerisate, an Terpenen enthalten, besonders vorteilhaft herstellen kann, indem man die Terpene dem Polymerisationsgemisch während der Polymerisation zusetzt.

Die Terpene werden den Copolymerdispersionen während der Herstellung der Polymerisat-Dispersionen durch Emulsionspolymerisation zugesetzt. Ihre Menge beträgt vorzugsweise 12 bis 60 Gew.%, insbesondere 5 bis 20 Gew.%, bezogen auf die Monomeren. Bevorzugt werden die Terpene den Monomeren vor oder bei der Herstellung des Ansatzes für das "batch"-Verfahren oder das Monomeren-oder Emulsions-Zulaufverfahren zugesetzt. Auf diese Weise kann eine besonders stabile und gleichmäßige Verteilung der Terpene in der Dispersion erreicht werden und die erhaltenen Dispersionen ergaben besonders wasserfeste Filme. Dagegen läßt die Wasserfestigkeit von Filmen zu wünschen übrig, die aus Polymerisat-Dispersionen erhalten werden, denen Terpene, wie Terpentinöl oder pine oil gemäß der Firmenschrift "ACRONAL 290 D und Filmbildehilfsmittel" erst nachträglich zugefügt werden.

Unter den vielen verwendbaren natürlich vorkommenden, industriell modifizierten oder hergestellten Terpenen kommen besonders die Mono-, Sesqui-und Di-Terpene in Betracht, wobei die in großen Mengen preiswert verfügbaren Monoterpene mit Siedepunkten oberhalb 150°C und -innerhalb dieser Gruppe -die Terpinene und vor allem die p-Menthadiene, wie besonders d-und l-Limonen sowie das Racemat "Dipentene" bevorzugt werden. Besonders geeignet wegen ihrer Unbedenklichkeit, ihres angenehmen Geruchs und ihrer Preiswürdigkeit sind auch Gemische, wie die Orangen-, Zitronen-und Grape-Fruit-Schalenöle oder die sogenannten Citrus-Terpene, deren Hauptkomponenten die oben genannten p-Menthadiene sind, sofern der Gehalt an Komponenten mit allylischen Doppelbindungen, z.B. Myrcen - (Nebenbestandteil in manchen Grape-Fruit-Schalenölen) oder anderen Komponenten, die die radikalische Polymerisation verlangsamen oder verhindern, nicht zu groß ist.

Neben den Terpenen sind auch besonders Dicyclopentadien sowie ferner Terpenoide verwendbar, die sich von den oben genannten Mono-, Sesqui-und Di-Terpenen herleiten, z.B. die Terpineole und Terpinen-ole sowie Borneol, Isoborneol, Fenchol, Linalool und Farnesol. Auch hier werden natürlich vorkommende preiswerte Gemische bevorzugt, z.B. "pine oil", in denen die genannten Verbindungen Hauptbestandteil sind. Derartige Terpenoide sind aber oft etwas weniger gut geeignet als die zuvor angegebenen Terpene, da sie die Wasseraufnahme der Dispersionsfilme weniger herabsetzen und auch die Filme weniger weichmachen. Alle diese Stoffe sollen hier unter dem Begrifft Terpene zusammengefaßt sein. Durch den Zusatz der Terpene bei der Emulsionspolymerisation wird der Glasübergangsbereich der daraus hergestellten Dispersionsfilme gegenüber entsprechenden ohne Terpenzusatz hergestellten Filmen deutlich, bei Zusätzen von 10 bis 20 Gew.% oft um 20 bis 50°C erniedrigt. Beim Extrahieren der Dispersionsfilme oder gaschromatographisch kann fast die gesamte eingesetzte Menge der Terpene wiedergefunden werden.

Für viele Anwendungen als Bindemittel spielt die Farbe der technischen Terpene und die durch sie hervorgerufene "Eigenfarbe" oder Verfärbung der Bindemittel(filme) eine Rolle. Kann ein gewisser "Gilb" nicht in Kauf genommen werden, wird die Farbzahl der Terpene zum Auswahlkriterium und erzwingt den Einsatz von -meist teuren - "raffinierten", farblosen oder schwach gefärbten Typen. Einen guten Kompromiss zwischen Farbe und Preis stellt z.B. das handelsübliche "Cutrale Citrus-Terpene wasserhell" dar, das zu über 96 % aus d-Limonen besteht und wegen der geringen Eigenfarbe auch für anspruchsvolle Produkte eingesetzt werden kann. Für viele Zwecke spielt aber die "Eigenfarbe" des Bindemittels keine entscheidende Rolle, und man kann die oft gelb gefärbten preiswerten normalen Handelswaren direkt einsetzen. Im übrigen zeigen die neuen Bindemittel eine bemerkenswert geringe Tendenz zum Vergilben bei Bewitterung.

Die wäßrigen Dispersionen der Copolymerisate, die unter Zusatz der Terpene, z.B. als Bindemittel insbesondere für Anstrichmittel geeignet sind, können in an sich üblicher Weise durch Emulsionscopolymerisation der Monomeren unter Mitverwendung der üblichen Emulgier-und Dispergiermittel sowie der üblichen wasserlöslichen radikalbildenden Polymerisationsinitiatoren und gegebenenfalls weiterer üblicher Zusatzstoffe, wie Puffersubstanzen, z.B. nach der "Batch"-Fahrweise sowie nach dem Emulsions-oder Monomeren-Zulaufverfahren gegebenenfalls unter Vorlage eines untergeordneten Anteils der Monomeren in einem Teil der wäßrigen Phase hergestellt werden, wobei die Terpene vorzugsweise als Lösung in den Monomeren zum Einsatz gelangen.

Als Emulgier-und Dispergierhilfsmittel, die meist in Mengen von 0,01 bis 5, insbesondere von 0,1 bis 3 Gew.%, bezogen auf die Monomeren eingesetzt werden, haben sich z.B. anionische Emulgatoren, wie Schwefelsäureester von Fettalkoholen, wie Laurylsulfat, Sulfierungsprodukte von oxalkylierten, insbesondere oxethylierten, meist 8 bis 12 C-Atome im Alkylrest enthaltenden Alkylphenolen, wie besonders p-n-Nonyl-und p-n-Dodecylphenol sowie p-Iooctylphenol, wasserlösliche Alkalisalze von Fettsäuren, wie Natriumstearat und Natriumoleat und sulfonierte und alkylierte Biphenylether besonders bewährt. Zusätzlich können auch nichtionische Emulgatoren, in einer Menge von 0 bis 3 Gew.%, bezogen auf die Monomeren eingesetzt werden, z.B. oxalkylierte, vorzugsweise oxethylierte Fettalkohole, Fettamine, Fettsäureamide und/oder meist 8 bis 12 C-Atome in den Alkylgruppen enthaltende Monoalkylphenole, die 5 bis 30, insbesondere 10 bis 25 Ethylenoxid-Einheiten im Molekül enthalten, z.B. oxethylierter Laurylalkohol, oxethylierter Oleylalkohol, oxethylierter Spermölalkohol und oxethylierter Stearylalkohol, oxethyliertes Stearinsäureamid, oxethyliertes Oleylamid, oxethylierte Ölsäure, oxethyliertes p-n-Nonylphenol, oxethyliertes p-Isooctylphenol und oxethyliertes p-n-Dodecylphenol.

Für die Herstellung der Copolymerisatdispersionen werden Styrol und/oder Methacrylsäuremethylester zusammen mit Homopolymerisate einer Glastemperatur unter 40°C bildenden Acryl-und/oder Methacrylsäureestern 1 bis 8 C-Atome enthaltender Alkanole sowie gegebenenfalls zusätzlich zusammen bis zu 40 Gew.%, bezogen auf die gesamten Monomeren, Acrylnitril, Vinylchlorid und/oder Vinylidenchlorid eingesetzt. Zusätzlich können auch in Anteilen von jeweils 0 bis 5 Gew.%, bezogen auf die gesamten Monomeren, $\alpha,\beta$-monoolefinisch ungesättigte, meist 3 bis 5 C-Atome enthaltene Mono-und/oder Dicarbonsäuren und/oder deren an den Stickstoffatomen substituierte Amide eingesetzt werden. Geeignete Acryl-und Methacrylsäureester, die vorzugsweise 2 bis 12 C-Atome im Alkoholrest enthalten, sind die des Methanols, Ethanols, Propanols, Isopropanols, n-Butanols, iso-Butanols, tert.-Butanols, n-Hexanols und 2-Ethylhexanols. Geeignete $\alpha,\beta$-olefinisch ungesättigte Carbonsäuren und deren Derivate sind vor allem Acrylsäure, Methacrylsäure, Fumarsäure, Acrylamid, Methacrylamid, Maleinsäurediamid, Fumarsäurediamid, N-Methylol-acrylsäure-und -methacrylsäureamid und deren Methyl-und n-Butylether, z.B. N-Methoxymethylmethacrylamid. Die Zusammensetzung der Monomeren wird so gewählt, daß man bei dem Terpenzusatz Dispersionen mit einer MFT (Mindest-Filmbildetemperatur gemessen nach DIN 53 787) von -20 bis +60°C, vorzugsweise von -20 bis +40°C erhält, wobei der Anteil an Monomeren, die Homopolymerisate einer Glastemperatur über 50°C ergeben, über 50 Gew.%, bezogen auf die Copolymerisate, liegen soll. Besonders geeignete Copolymerisate haben z.B. folgende Zusammensetzung:

20 bis 60 Gew.% (Meth)acrylsäureester von 2 bis 12 C-Atome enthaltenden Alkanolen, wie besonders Ethylacrylat, n-Butylacrylat und -methacrylat sowie iso-Butylacrylat und -methacrylat, insbesondere 30 bis 50 Gew.% n-Butylacrylat,

40 bis 80 Gew.% Styrol und oder Methacrylsäuremethylester und/oder Acryl-und/oder Methacrylsäure-tert.-butylester, insbesondere 50 bis 70 Gew.% Styrol,

0 bis 5 Gew.% Acrylsäure und/oder Methacrylsäure und/oder Furmarsäure und 0 bis 3 Gew.% Acryl-und/oder Methacrylamid.

Die neuen Terpene enthaltenden Copolymerisat-Dispersionen können z.B. als Bindemittel für industrielle Metall-Beschichtungen, bei denen es auf geringe Wasseraufnahme (Wasserquellung) und/oder auf das Überstehen des Schwitzwassertests ankommt, z.B. im Maschinen- und Fahrzeugbau bei Unterbodenschutz, Grundierungen und in Lackaufbauten, z.B. der als "base coat" bezeichneten unteren Schicht von Metallic-Lackierungen eingesetzt werden, sowie für industrielle Beschichtungen von zementgebundenen Substraten, wie Asbestzementplatten und -dachsteinen und Beton-und anderen Fertigbauteilen, bei denen eine geringe Wasseraufnahme (Wasserquellung) der Beschichtung den Transport von Salzen und anderen löslichen Bestandteilen durch die Beschichtung stark herabsetzt. Schließlich können die neuen Bindemittel besonders für solche Anstrichmittel in den üblichen Mengen eingesetzt werden, wo mit häufiger oder längerer Wasserbelastung der Beschichtungen zu rechnen ist, z.B. im Bereich von Schlagregen - (Fassaden) oder Spritzwasser (Sockel, Naßräume). Wegen der physiologischen Unbedenklichkeit der Terpene, ihres angenehmen Geruchs, ihrer hohen Füllbarkeit und ihrer Preiswürdigkeit können diese Bindemittel vorteilhaft auch für Dispersionsinnenfarben verwendet werden, die meist eine PVK - (Pigmentvolumenkonzentration) über 80 mit Scheuerfestigkeiten (nach DIN 53 778) über 10 000 Zyklen aufweisen.

Die in den folgenden Beispielen genannten Teile und Prozente beziehen sich auf das Gewicht.

Beispiel 1

In einem Reaktionsgefäß mit Rührer, 2 Zulaufleitungen, Stickstoff-Einleitung, Rückflußkühler, Thermometer und Thermostatbad legt man 350 Teile Wasser, 4,5 Teile 35 %ige wäßrige Lösung des Na-Salzes des sauren Schwefelsäureesters eines p-Nonylphenolatethoxylats mit 20 EO-Einheiten (EO = Ethylenoxid) sowie 15 Teile einer 20 %igen wäßrigen Lösung eines p-Nonylphenol-50EO-Adduktes vor, verdrängt die Luft mit Stickstoff und heizt auf 90°C auf. Dann gibt man 10 % einer Lösung aus 2,5 Teilen Na-Persulfat und 60 Teilen Wasser (Zulauf II) zu und fährt anschließend den Rest von Zulauf II in 3,5 Stunden gleichmäßig neben einem Zulauf I zu, der aus einer Emulsion von 409,5 Teilen Styrol, 128 Teilen n-Butylacrylat, 62,5 Teilen Citrus-Terpenen, 10 Teilen Acrylsäure in einer Lösung aus 168 Teilen Wasser, 22 Teilen einer 35 %igen Lösung des oben angegebenen anionischen Emulgators und 5 Teilen Acrylamid besteht. Die Zulaufzeit für diesen Zulauf I beträgt 3 Stunden. Nach Ende der Zuläufe polymerisiert man noch etwa 1 1/2 Stunden nach, kühlt ab und stellt den pH-Wert mit Ammoniakwasser auf 8. Man erhält eine feinteilige Dispersion einer mittleren Teilchengröße von 110 nm und einer Mindest-Filmbildetemperatur (MFT) von 17°C, deren schwach gelblich gefärbter Film nach 24 Stunden Wasserlagerung bei Raumtemperatur eine Wasseraufnahme von nur 2 % besitzt.

Im Vergleich hierzu nimmt ein unter vergleichbaren Bedingungen hergestellter Film einer Dispersion annähernd gleicher MFT aus 300 Teilen Styrol und 300 Teilen n-Butylacrylat, der keine Terpene enthält 10 % Wasser auf.

Die Dispersion eignet sich als Bindemittel für hochgefüllte Innenfarben.

Beispiel 2

Man verfährt wie in Beispiel 1 angegeben, setzt aber als Monomere 233 Teile Styrol, 233 Teile Methylmethacrylat, 72 Teile n-Butylacrylat, 15 Teile Acrylsäure und 9 Teile Acrylamid ein. Man erhält eine Dispersion einer mittleren Teilchengröße von 100 nm und einer MFT von 30°C, die als Bindemittel für "base coat" - schwitzwassertest-feste Beschichtungen ergibt.

Beispiel 3

Man verfährt wie in Beispiel 1 angegeben, setzt aber anstelle der Methylmethacrylat-Styrol-Mischung 466 Teile Styrol ein. Man erhält eine Dispersion einer mittleren Teilchengröße von 130 nm und einer MFT von 33°C. Sie eignet sich als Bindemittel für schwitzwassertest-feste Beschichtungen auf grundierten Blechen.

(A) Hochgefüllte Innenfarbe

Nach der folgenden Rezeptur wird unter Verwendung der terpenhaltigen Polymer-Dispersion von Beispiel 1 eine Innenfarbe hergestellt, die eine PVK von 83 % und eine Naßscheuerbeständigkeit - (gemessen nach DIN 53 778) über 10 000 Cyclen hat:

```
· Wasser                                                      91,00 Teile
  Natriumpolyphosphat, 10 %ige wäßrige Lösung                18,25 Teile
  Ammoniumsalz der Polyacrylsäure, 30 %ige wäßrige Lösung     2,50 Teile
  Ammoniak konz.                                              2,50 Teile
  Konservierungsmittel                                        3,00 Teile
  Methylcellulose hv., 2 %ige wäßrige Lösung                150,00 Teile
  Testbenzin (180/210°C)                                     12,00 Teile
  2,2,4-Trimethyl-pentan-1,3-diol-mono-iso-butyrat
  (Monomerengemisch)                                         12,00 Teile
  Titandioxid (Rutil)                                        71,00 Teile

  Aluminiumsilikat, gefällt                                  12,00 Teile
  Cacliumcarbonat, gefällt                                   83,00 Teile
  Calcit (oder Dolomit), mikronisiert                       417,00 Teile
  Anlagerungsprodukt von 23 Mol Ethylenoxid an ein Mol
  olefinisch ungesättigten C₁₄-C₂₀-Fettalkohol               6,00 Teile
  handelsüblicher Entschäumer                                 0,75 Teile
  Polymer-Dispersion                                         91,4  Teile
```

Zum Vergleich wurde nach der gleichen Rezeptur eine Innenfarbe mit gleicher PVK hergestellt, jedoch als Bindemittel eine 50 %ige wäßrige Dispersion eines Copolymerisats aus gleichen Teilen Styrol und n-Butylacrylat in gleicher Menge eingesetzt. Die erhaltene Innenanstrichfarbe zeigte eine Naßscheuerbeständigkeit von nur 2 950 Cyclen.

(B) Wäßrige Metallic-Base-coat-Lackierung

Nach dem nachfolgenden Rezept wird unter Verwendung der terpenhaltigen Polymerdispersion von Beispiel 2 eine wäßrige Metallic-Basislackierung hergestellt:

a) Zubereitung der Aluminiumpigmente

```
75,4    Teile einer handelsüblichen, für wäßrige Medien geeignete
        Aluminiumpaste, non leafing,
44,7    Teile Butylglykol,
 0,3    Teile eines handelsüblichen Derivates von 2,3-Butin-diol-
        (1,4)
───────
120,4   Teile Aluminiumpigment-Paste in Butylglykol.
```

b) Verdickerlösung

```
76,6      Teile vollentsalztes Wasser
0,3       Teile eines handelsüblichen Derivates von 2,3-Butindiol-
          (1,4)
6,9       Teile einer ca. 25 %igen Lösung eines Verdickers auf Poly-
          urethanbasis in Wasser/Butyldiglykol
_____
83,8      Teile Verdickerlösung
```

c) Konfektionierung der Dispersion

```
553,2     Teile Dispersion (Beispiel 2)
80,1      Teile vollentsalztes Wasser
3,4       Teile eines handelsüblichen fluorhaltigen Tensides
2,8       Teile eines handelsüblichen Korrosionsschutzmittels
2,9       Teile eines handelsüblichen Derivates von 2,3-Butin-
          diol-(1,4)
_____
642,4     Teile konfektionierte Dispersion (Beispiel 2).
```

d) Lack

```
120,4     Teile Aluminiumpigment-Paste a)
83,8      Teile Verdickerlösung b)
642,4     Teile konfektionierte Dispersion c)
153,4     Teile vollentsalztes Wasser
_____
1000,0    Teile Lack
```

Der spritzfertige Lack mit einem ungefähren Festgehalt von 30 % besitzt einen pH-Wert von 8,8.

Nach der Applikation (Schichtstärke des Trockenfilmes ca. 10 bis 14 μm) wird 5 Minuten lang bei 50°C getrocknet und danch ein Decklack - (Klarlack) appliziert.

Ein nach diesem Verfahren hergestellter 2-Schicht-Metallic-Lack zeigt bei der Schwitzwasserprüfung nach DIN 53 017 einen Glanzabfall von ursprünglich 86 % (Multigloss-Messung, Winkel 20°) auf 81 % nach 21 Tagen; die Oberfläche ist blasenfrei. Mit einer ohne den erfindungsgemäßen Zusatz von Citrus-Terpenen hergestellten Dispersion wird -unter sonst vergleichbaren Bedingungen von Rezept und Applikation -bereits nach 5 Tagen im Schwitzwassertest nach DIN 53 017 ein Glanzabfall (Multigloss-Messung), von ursprünglich 89 % auf 60 % gemessen.

(C) Schwitzwasserbeständige Beschichtung

Nach dem folgenden Rezept wird unter Verwendung der terpenhaltigen Polymerdispersion von Beispiel 3 eine lufttrocknende Beschichtung auf grundierten Blechen hergestellt, die im Schwitzwassertest nach DIN 53 017 eine Beständigkeit von mindestens 20 Tagen aufweist.

| Dispersion/Beispiel 3 | 612,0 Teile |
|---|---|
| Ammoniak konz. | 5,2 Teile |
| vollentsalztes Wasser | 50,0 Teile |
| Butylglykol | 64,9 Teile |
| ein handelsüblicher Alkylsulfonsäureester des Phenols | 40,8 Teile |
| ein handelsüblicher Korrosionsinhibitor | 3,7 Teile |
| ein handelsübliches Derivat von 2,3-Butin-diol-(1,4) | 7,4 Teile |
| ein handelsübliches Kaliumsalz eines organischen Phosphates | 2,0 Teile |
| Bariumsulfat, gefällt | 52,6 Teile |
| Titandioxid, Rutil | 106,6 Teile |
| Eisenoxidschwarz | 2,8 Teile |
| ein handelsübliches Metallsalz einer organischen Nitroverbindung | 9,3 Teile |

Ohne den erfindungsgemäßen Gehalt an Terpenen wird mit einer sonst ähnlich aufgebauten Dispersion eine Schwitzwasserbeständigkeit nach DIN 53 017 von nur 8 Tagen (blasenfreie Oberfläche) erzielt.

**Ansprüche**

1. Verfahren zur Herstellung von wäßrigen Dispersionen von Copolymerisaten mit einer MFT von -20 bis +60°C aus 1 bis 12 C-Atome im Alkoholrest enthaltenden Acryl-und/oder Methacrylsäurealkylestern, Styrol, Acrylnitril, Vinylchlorid und/oder Vinylidenchlorid sowie jeweils 0 bis 5 Gew.% α,β-monoolefinisch ungesättigten mono- und/oder Dicarbonsäuren und/oder deren gegebenenfalls am Stickstoffatom substituierten Amiden, deren Anteil an Monomeren deren Homopolymerisate eine Glastemperatur über 50°C haben, über 50 Gew.%, bezogen auf die Copolymerisate, liegt, und die einen Gehalt von 2 bis 100 Gew.%, bezogen auf die Copolymerisate, an Terpenen haben, dadurch gekennzeichnet, daß man die Terpene dem Polymerisationsgemisch während der Polymerisation zusetzt.

2. Verfahren gemäß Anspruch 1, gekennzeichnet durch daß man als Terpene 2 bis 100 Gew.%, bezogen auf die Monomeren, an Dicyclopentadien einsetzt.

3. Verwendung von Dispersionen, die gemäß Anspruch 1 hergestellt sind, als Bindemittel für hochgefüllte Innenfarben.

4. Verwendung von Dispersionen, die gemäß Anspruch 1 hergestellt sind, als Bindemittel für Metallbeschichtungen.